(19) Europäisches Patentamt
European Patent Office
Office européen des brevets

(11) EP 2 796 488 A1

(12) # EUROPEAN PATENT APPLICATION
published in accordance with Art. 153(4) EPC

(43) Date of publication:
**29.10.2014 Bulletin 2014/44**

(21) Application number: **13824952.9**

(22) Date of filing: **26.07.2013**

(51) Int Cl.:
***C08J 5/22*** *(2006.01)* ***C08G 79/00*** *(2006.01)*
***G01N 27/04*** *(2006.01)* ***G01N 27/12*** *(2006.01)*
***H01B 1/06*** *(2006.01)* ***H01B 13/00*** *(2006.01)*
***H01M 8/02*** *(2006.01)*

(86) International application number:
**PCT/JP2013/070299**

(87) International publication number:
**WO 2014/021208 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2012 JP 2012171062**

(71) Applicant: **National Institute for Materials Science Tsukuba-shi, Ibaraki 305-0047 (JP)**

(72) Inventors:
- **HIGUCHI Masayoshi**
**Tsukuba-shi**
**Ibaraki 305-0047 (JP)**
- **PANDEY Rakesh Kumar**
**Tsukuba-shi**
**Ibaraki 305-0047 (JP)**
- **MORIYAMA Satoshi**
**Tsukuba-shi**
**Ibaraki 305-0047 (JP)**

(74) Representative: **Jansen, Cornelis Marinus et al**
**V.O.**
**Johan de Wittlaan 7**
**2517 JR Den Haag (NL)**

(54) **HIGHLY PROTON-CONDUCTIVE POLYMER FILM, METHOD FOR PRODUCING SAME, AND HUMIDITY SENSOR**

(57) A proton conductive film, a method of producing the proton conductive film, and a highly sensitive humidity sensor are provided. The proton conductivity (room temperature, 95%RH) of the proton conductive film is $3\times10^{-2}Sm^{-1}$ or more, and the proton conductive film is usable under a neutral-solvent atmosphere. A highly proton conductive polymer film made of an organic/metallic hybrid polymer film including: one or more metal ions selected from a group consisting of Fe ion, Co ion, Ru ion, Zn ion, and Ni ion; and bis(terpyridyl)benzene, is used.

*FIG. 3*

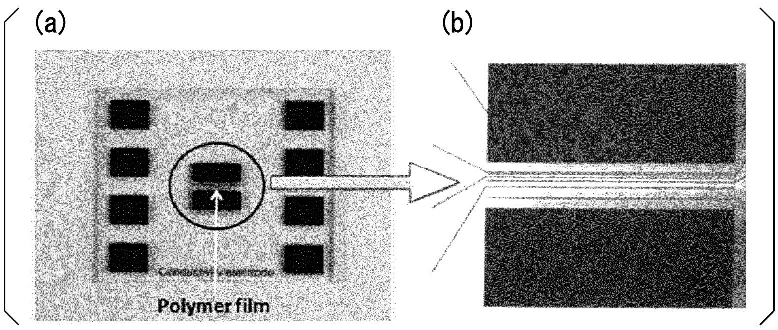




Printed by Jouve, 75001 PARIS (FR)

## Description

### TECHNICAL FIELD

The present invention relates to a highly proton conductive polymer film, a method of producing the highly proton conductive polymer film, and a humidity sensor.

Priority is claimed on Japanese Patent Application No. 2012-171062, filed August 1, 2012, the content of which is incorporated herein by reference.

### BACKGROUND ART

The highly proton conductive polymer film is a polymer film having a high proton conductivity.

In the material having high proton conductivity, the current-voltage characteristics change depending on humidity in a highly sensitive manner, and the conductivity increases under a high humidity condition.

Non-Patent Literature 1 (NPL 1) relates to coordination polymer metal complexes including copper ion. In these coordination polymer metal complexes, the current-voltage characteristics change depending on humidity in a highly sensitive manner, and the conductivity increases under a high humidity condition. Thus, these materials are high proton conductive materials.

For example, the highly proton conductive polymer film is utilized as the proton exchange membrane of fuel cells or humid sensors (Patent Literatures 1 to 3).

Nafion (registered trade mark) is known as a proton exchange membrane. Nafion is a sulfonated tetrafluoroethylene copolymer. Since Nafion has sulfonate groups with negative charge grafted on the termini of the polytetrafluoroethylene backbones, positively-charged protons move in between the sulfonate groups without a hindrance, resulting on high proton conductivity. In Non-Patent Literature 9 (NPT 9), the proton transfer mechanism in Nafion membrane is discussed.

Since the development of Nafion in 1960's, it is blended with a variety of other polymers and improvements are introduced such as safety and the like. For example, in the proton exchange membrane made of an improved Nafion including a hyper-branched polymer, a proton exchange membrane with conductivity of $8\times10^{-2}Scm^{-1}$ is disclosed (PTL 1). Also, a proton exchange membrane with conductivity (25°C) of $2\times10^{-2}Scm^{-1}$ and Nafion 112 with conductivity (25 °C) of $2.7\times10^{-2}Sm^{-1}$ are disclosed (PTL 2).

In NPLs 8, 10, and 11, it is described that Nafion is a material with high proton conductivity since the current-voltage characteristics of Nafion change depending on humidity in a highly sensitive manner and conductivity increases under a high humidity condition.

Specifically, it is disclosed that the proton conductivities (30°C, 2-terminal method) of Nafion 112, 115, and 117 are about 0.038 to $0.047Scm^{-1}$ (NPL 8).

Additionally, measurement of conductivity of the proton exchange membrane is performed by the impedance spectroscopy (NPL 10). Also, it is disclosed that conductivity (room temperature, 100%RH) of Nafion membrane is $0.073Scm^{-1}$ based on the impedance measurement of Nafion membrane (NPL 11).

As a material having proton conductivity (100%RH) of $10^{-2}Scm^{-1}$, which is comparable to that of Nafion, the coordination polymer metal complex is disclosed (PTL 3).

Also, as a material having high proton conductivity, metal-organic frameworks (MOFs, also known as porous coordination polymers: PCP) is reported (NPLs 1 to 7). In these MOFs (PCPs), the current-voltage characteristics change depending on humidity in a highly sensitive manner and conductivity increases under a high humidity condition. Thus, these MOFs (PCPs) are also a highly proton conductive material.

The proton conductivity (298K, 95%RH) of PCPs described in NPL 1 is $2.3\times10^{-9}$ to $2.0\times10^{-6}Scm^{-1}$ (for example, see Table 1 of NPL 1).

As a material with high proton conductivity, a ceramic membrane is also reported. In the ceramic membrane, the current-voltage characteristics change depending on humidity in a highly sensitive manner and conductivity increases under a high humidity condition. Thus, the ceramic membrane is also a highly proton conductive material.

The conductivity (500 °C) of BZY ($BaZr_{0.8}Y_{0.2}O_{3-\delta}$) membrane is $0.11Scm^{-1}$ (NPL 12).

The conductivity (800 °C, wet atmospheres) of Ca-doped $LaNbO_4$ membrane is about $10^{-3}Scm^{-1}$(NPL 13).

Also, a humidity sensor using polyaniline supplemented with polyvinyl alcohol (PVA) is disclosed (NPL 14). It is shown that polyaniline supplemented with PVA can be used as a humidity sensor by measuring the resistance value of the material, since the proton conductivity of polyaniline changes depending on humidity drastically.

However, the proton conductivities of these materials are not sufficient for usage of the proton exchange membrane of fuel cells or humidity sensors. Also, their film-forming properties are not sufficient. Furthermore, in terms of Nafion, it cannot be utilized under a neutral solvent atmosphere since Nafion itself has strong acidity.

[Related Art Document]

[Patent Literature]

PTL 1: Japanese Unexamined Patent Application, First Publication No. 2010-126723 (A)
PTL 2: Japanese Unexamined Patent Application, First Publication No. 2010-155991 (A)
PTL 3: Japanese Unexamined Patent Application, First Publication No. 2004-31173 (A)

[Non-Patent Literature]

NPL 1: Akihito Shigematsu et al., Wide control of proton conductivity in porous coordination polymers, J. Am. Chem. Soc., 2011, 133, 2034-2036
NPL 2: Masaaki Sadakiyo et al., Promotion of low-humidity proton conduction by controlling hydrophilicity in layered metal-organic frameworks, J. Am. Chem. Soc., 2012, 134, 5472-5475
NPL 3: Teppei Yamada et al., High proton conductivity of one-dimensional ferrous oxalate dihydrate, J. Am. Chem. Soc., 2009, 131, 3144-3145
NPL 4: Sareeya Bureekaew et al., One-dimensional imidazole aggregate in aluminium porous coordination polymers with high proton conductivity, nature materials, vol. 8, October 2009, 831-836
NPL 5: Masaaki Sadakiyo et al., Rational designs for highly proton-conductive metal-organic frameworks, J. Am. Chem. Soc., 2009, 131, 9906-9907
NPL 6: Hiroshi Kitagawa et al., Highly proton-conductive copper coordination polymer, H2dtoaCu (H2dtoa=dithiooxamide anion), Inorganic chemistry communications 6 (2003) 346-348
NPL 7: Y. Nagao et al., Preparation and proton transport property of N,N' -diethyldithiooxamidatocopper coordination polymer, Synthetic metals 154 (2005) 89-92
NPL 8: Chang Hyun Lee et al., Importance of proton conductivity measurement in polymer electrolyte membrane for fuel cell application, Ind. Eng. Chem. Res. 2005, 44, 7617-7626
NPL 9: Klaus Schmidt-Rohr et al., Parallel cylindrical water nanochannels in Nafion fuel-cell membranes, Nature Materials, vol.7, January 2008, 75-83
NPL 10: S. D. Mikhailenko et al., Measurements of PEM conductivity by impedance spectroscopy, Solid State Ionics 179 (2008) 619-624
NPL 11: J. J. Fontanella et al., Electrical impedance studies of acid form NAFION membranes, Solid State Ionics 66 (1993) 1-4
NPL 12: Daniele Pergolesi et al., High proton conduction in grain-boundary-free yttrium-doped barium zirconate films grown by pulsed laser deposition, Nature Materials, vol.9, October 2010, 846-852
NPL 13: Reidar Haugsrud et al., Proton conduction in rare-earth ortho-niobates and ortho-tantalates, Nature Materials, vol.5, March 2006, 193-196
NPL 14: Ming-Zhi Yang et al., Fabrication and characterization of Polyaniline/PVA humidity microsensors, Sensors 2011 11 8143-8151

DISCLOSURE OF INVENTION

[Problems to be Solved by the Invention]

The purpose of the present invention is to provide: a proton conductive membrane, which has proton conductivity (room temperature, 95%RH) of $3\times10^{-2}Scm^{-1}$ or higher and is usable under a neutral solvent atmosphere; a method of producing the proton conductive membrane; and a highly sensitive humidity sensor.

[Means for Solving the Problem]

The inventors of the present invention successfully have produced a proton conductive membrane, which is made of an organic/metallic hybrid polymer and has proton conductivity (room temperature, 95%RH) of $0.034\times10^{-4}Scm^{-1}$ to $1.3\times10^{-1}Sm^{-1}$. The present invention is made by the inventors by finding out that the above-mentioned proton conductive membrane is usable under a neutral solvent atmosphere in contrast to Nafion, which itself has strong acidity.
The present invention has aspects described below.

(1) A highly proton conductive polymer film made of an organic/metallic hybrid polymer film including: one or more metal ions selected from a group consisting of Fe ion, Co ion, Ru ion, Zn ion, and Ni ion; and bis(terpyridyl)benzene.
(2) The highly proton conductive polymer film according to the above-described (1), wherein the organic/metallic hybrid polymer is represented by a formula (1) below.

[Formula 1]

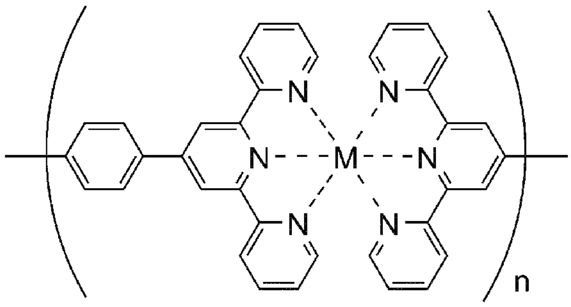

— (1)

M is one or more metal ions selected from a group consisting of Fe ion, Co ion, Ru ion, Zn ion, and Ni ion; and n is an integer of 5 or more and 1000 or less in the formula (1).
(3) A method of producing a highly proton conductive polymer film including the steps of:

preparing a mixed solution by dispersing an organic/metallic hybrid polymer in a solvent at a concentration of 10 to 1000 mg/L, the organic/metallic hybrid polymer including: one or more metal ions selected from a group consisting of Fe ion, Co ion, Ru ion, Zn ion, and Ni ion; and bis(terpyridyl)benzene; and
forming a film of the mixed solution on a substrate by a wet film-forming method selected from a casting method, a dipping method, and a spin coating method.

(4) The method of producing a highly proton conductive polymer film according to the above-described (3), wherein the solvent is water, an organic solvent, or a mixture of water and an organic solvent, and
the organic solvent is one selected from a group consisting of alcohol, acetonitrile, dimethyl sulfoxide, and dimehylformamide.
(5) A humidity sensor including:

a substrate;
two electrodes formed at a distance from each other on a surface of the substrate; and
a film formed on the surface so that the two electrodes are covered by the film, wherein the film is the highly proton conductive polymer film according to the above-described aspect (1) or (2).

[Effects of the Invention]

The highly proton conductive polymer film, which is an aspect of the present invention, is made of an organic/metallic hybrid polymer film including: one or more metal ions selected from a group consisting of Fe ion, Co ion, Ru ion, Zn ion, and Ni ion; and bis(terpyridyl)benzene. Thus, the highly proton conductive polymer film, which has proton conductivity (room temperature, 95%RH) of $3x\times10^{-2}Sm^{-1}$or higher and is usable under a neutral solvent atmosphere, can be provided.
The method of producing a highly proton conductive polymer film, which is another aspect of the present invention, includes the steps of: preparing a mixed solution by dispersing an organic/metallic hybrid polymer in a solvent at a concentration of 10 to 1000 mg/L, the organic/metallic hybrid polymer including: one or more metal ions selected from a group consisting of Fe ion, Co ion, Ru ion, Zn ion, and Ni ion; and bis(terpyridyl)benzene; and forming a film of the mixed solution on a substrate by a wet film-forming method selected from a casting method, a dipping method, and a spin coating method. Thus, the proton conductive membrane, which has proton conductivity (room temperature, 95%RH) of $3\times10^{-2}Sm^{-1}$ or higher and is usable under a neutral solvent atmosphere, can be readily produced.
The humidity sensor includes: a substrate; two electrodes formed at a distance from each other on a surface of the substrate; and a film formed on the surface so that the two electrodes are covered by the film, wherein the film is

the highly proton conductive polymer film according to the above-described aspect (1) or (2). Thus the humidity sensor becomes highly sensitive.

BRIEF DESCRIPTION OF THE DRAWINGS

FIG. 1A is a schematic plan view showing an example of the humidity sensor, which is an aspect of the present invention.
FIG. 1B is an A-A' cross-sectional view of the humidity sensor shown in FIG. 1A.
FIG. 2 is a schematic view showing an example of the interposing region between electrodes of the highly proton conductive polymer film.
FIG. 3 is a photographic image showing the substrate with electrodes used in the present embodiment and the polymer film formed on the substrate.
FIG. 4A is an impedance plot (Nyquist plot) of an Fe polymer film.
FIG. 4B is an impedance plot (Nyquist plot) of an Fe polymer film.
FIG. 4C is an impedance plot (Nyquist plot) of an Fe polymer film.
FIG. 4D is an impedance plot (Nyquist plot) of an Fe polymer film.
FIG. 5 is a Nyquist plot of an Fe polymer film under the condition of 58%RH and at room temperature.
FIG. 6A is a Nyquist plot of a Ru polymer film.
FIG. 6B is a Nyquist plot of a Ru polymer film.
FIG. 6C is a Nyquist plot of a Ru polymer film.
FIG. 7A is a Nyquist plot of a Zn polymer film.
FIG. 7B is a Nyquist plot of a Zn polymer film.
FIG. 7C is a Nyquist plot of a Zn polymer film.
FIG. 8 is a Nyquist plot of a Co polymer film.
FIG. 9 is a Nyquist plot of a Ni polymer film.
FIG. 10 is a graph showing an example of measured leaked current values.
FIG. 11 is I-V characteristics of an Fe polymer film under the condition of 95%RH.
FIG. 12 is I-V characteristics of an Fe polymer film under the vacuum condition in the atmosphere (28%RH).
FIG. 13 is I-V characteristics of an Fe polymer film in the atmosphere (28%RH) after the test under the condition of 95%RH. The sweep moves from -3.0V to 3.0V first, and then moves back to -3.0V again.
FIG. 14 is I-V characteristics of an Fe polymer film in the atmosphere (28%RH) after the test under the condition of 95%RH. The sweep moves from -5.0V to 5.0V first, and then moves back to -5.0V again.
FIG. 15 is I-V characteristics of an Fe polymer film at sweeping rates of 1s delay (a), 5s delay (b), and 20s delay (c).
FIG. 16 is I-V characteristics of a Ru polymer film in the atmosphere (28%RH) after the test under the condition of 95%RH.
FIG. 17A is a graph showing I-V characteristics of a Ru polymer film.
FIG. 17B is a graph showing I-V characteristics of a Ru polymer film.
FIG. 18 is I-V characteristics of a Zn polymer film under the condition of 95%RH.

EMBODIMENTS FOR CARRYING OUT THE INVENTION

[Embodiments of the Present Invention]

The highly proton conductive polymer film, the method of producing the same, and the humidity sensor of the present invention are explained below in reference to the drawings.

[Highly proton conductive polymer film]

First, the highly proton conductive polymer film, which is an embodiment of the present invention, is explained.
The highly proton conductive polymer film of the embodiment of the present invention is made of an organic/metallic hybrid polymer film including: one or more metal ions selected from a group consisting of Fe ion, Co ion, Ru ion, Zn ion, and Ni ion; and bis(terpyridyl)benzene.
The above-described organic/metallic hybrid polymer is represented by the previously described formula (1).
In the formula (1), M is one or more metal ions selected from a group consisting of Fe ion, Co ion, Ru ion, Zn ion, and Ni ion; and n is an integer of 5 or more and 1000 or less.
For example, the above-described organic/metallic hybrid polymer is represented by the formulae (1) or (2)

below.

[Formula 2]

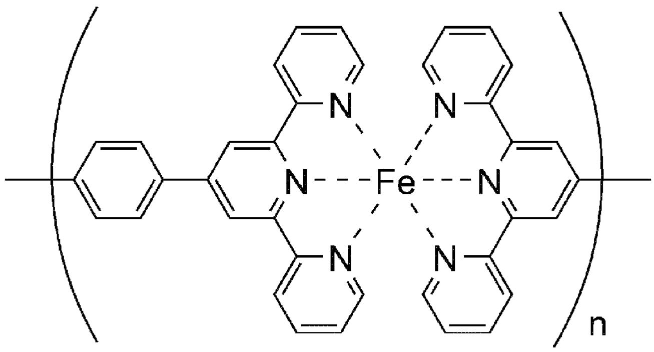

— (2)

[Formula 3]

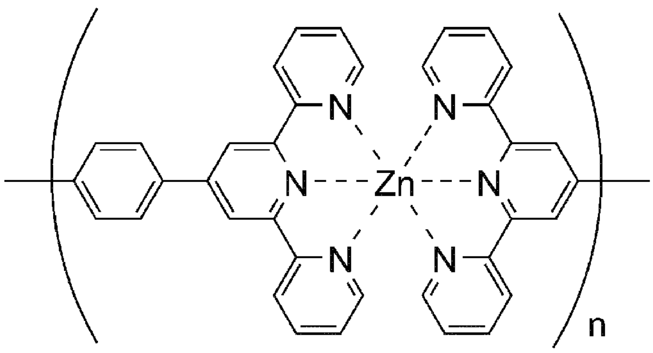

— (3)

[Method of producing the highly proton conductive polymer film]

Next, the method of producing the highly proton conductive polymer film, which is another embodiment of the present invention, is explained.

The method of producing a highly proton conductive polymer film, which is another embodiment of the present invention, includes the steps of: preparing a mixed solution by dispersing an organic/metallic hybrid polymer made of supramolecules in a solvent at a concentration of 10 to 1000 mg/L, the supermolecules including: one or more metal ions selected from a group consisting of Fe ion, Co ion, Ru ion, Zn ion, and Ni ion; and bis(terpyridyl)benzene; and forming a film of the mixed solution on a substrate by a wet film-forming method selected from a casting method, a dipping method, and a spin coating method.

It is necessary to prepare the mixed solution by dispersing the organic/metallic hybrid polymers in the solvent at the concentration of 10 to 1000 mg/L. By performing wet film-forming using the mixed solution prepared as described above, a homogeneous and flat membrane can be formed.

It is preferable that the solvent is water, an organic solvent, or a mixture of water and an organic solvent, and the organic solvent is one selected from a group consisting of alcohol, acetonitrile, dimethyl sulfoxide, and dimethylformamide.

As an example of alcohol, methanol, ethanol, or the like can be named.

When performing the spin coating, it is preferable that the spin coating includes a low-speed process and a high-speed process. For example, it is rotated at 400 rpm for 120 seconds first. Then, it is further rotated at 500 rpm for 160 seconds. By having the above-explained configuration, a homogeneous and flat membrane can be formed.

[Humidity sensor]

Next, the humidity sensor, which is another embodiment of the present invention, is explained.

FIGS. 1A and 1B are schematics indicating an example of the humidity sensor, which is an embodiment of the present invention. FIG. 1A is a plan view. FIG. 1B is a cross-sectional view in the A-A' line in FIG. 1A.

As shown in FIGS. 1A and 1B, the humidity sensor 1 includes: the substrate 41; the two electrodes 31, 32 formed at a distance from each other on a surface of the substrate 41; and the film 11 formed on the surface so that the two electrodes 31, 32 are covered by the film.

The film 11 is the above-described highly proton conductive polymer film.

The electrodes 31, 32 are connected to the power supply 36 through the wiring 34. By operating the power supply 36, voltage can be applied to the interposing region 11c between the electrodes 31 and 32 on the film 11.

FIG. 2 is a schematic view showing an example of the interposing region between electrodes of the highly proton conductive polymer film when voltage is applied in the atmosphere of 95%RH using a humidity sensor with a film made of Fe polymer.

When voltage is applied, a region of Fe (III) appears in the vicinity of one of the electrodes. Because of this, proton conductivity is improved.

The highly proton conductive polymer film of the present embodiment of the present invention is usable for polymer electrolyte fuel cells.

The polymer electrolyte fuel cell, which is another embodiment of the present invention, includes: a cathode electrode; an anode electrode positioned to face the above-described cathode electrode; and an electrolyte sandwiched with the electrodes. In this case, the electrolyte is the above-described highly proton conductive polymer film.

In this polymer electrolyte fuel cell, the highly proton conductive polymer film is used as the electrolyte. Thus, it can be used as a fuel cell with high storage capacity.

The highly proton conductive polymer film, the method of producing the same, and the humidity sensor of the present embodiments of the present invention are not particularly limited by the description of the embodiments above. Thus, modifications, addition, and/or omission can be made within the technical concept defined by the scope of the present invention. Specific examples of the embodiments of the present invention are explained in Examples below. Similarly, the present invention is not limited by the descriptions of Example below.

[Examples]

[Example 1]

[Sample Production for Measurement of Conductivity]

First, a quartz substrate, which was provided with 8 electrodes on one of its surface and had a rectangular shape in a plan view, was prepared.

Among the 8 electrodes, 4 of them were connected to power supply contacting parts, which had a rectangular shape in a plan view, on one side. Other 4 of the 8 electrodes were connected to power supply contacting parts, which had a rectangular shape in a plan view, on other side.

Each of the electrodes had a linear shape in a plan view between two mark parts in the middle of the substrate in the rectangular shape in a plan view. The four lines elongated from the power supply contacting parts on the one side and the four lines elongated from the power supply contacting parts on the other side were positioned so as to be engaged each other. All lines at the engaged section were aligned in parallel each other. The length corresponding to the lines being aligned in parallel (width of electrode) was 2.5 mm. The interval between the electrodes was set so as to be different each other in in the range of 10 $\mu$m to 250 $\mu$m. Because of this, when a film was formed so that the electrodes between the mark parts in the middle of the substrate were covered by the film, current-voltage characteristics of the film can be measured in different electrode distances by connecting any one of the power supply connecting parts on the one side to the power supply, and by connecting any one of power supply connecting parts on the other side, during application of voltage on the film.

Next, the mixed solution was prepared by dispersing Fe polymer (organic/metallic hybrid polymer) in ethanol at the concentration of 100 mg/L.

Next, the substrate was blown by nitrogen gas after removal of residual water and debris on the electrode surface on the substrate by washing with acetone in ultrasonic for 2 minutes and then washing with isopropanol.

Immediately after that, the polymer film was formed on the entire surface of the substrate so that the electrodes were covered by the film using 10 mL of the mixed solution by the spin coating method. The spin coating was performed in the condition where initial rotation rate was 400 rpm for 120 seconds and then 500 rpm for 160 seconds.

Next, among the formed polymer film, the film on the part other than the area between the mark parts in the middle of the substrate was removed carefully with cotton dampened by ethanol.

By following the procedure described above, the sample of Example 1 for conductivity measurement was prepared.

FIG. 3 a photographic image showing the substrate with electrodes used in the Example 1 and the polymer film formed on the substrate. The panel (a) corresponds to a full view picture. The panel (b) corresponds to an enlarged picture. Since the film was transparent, the part with film was indicated by an arrow.

[Example 2]

The sample of Example 2 for conductivity measurement was prepared as in Example 1 except for preparing the mixed solution by dispersing Ru polymer (organic/metallic hybrid polymer) in ethanol at the concentration of 250 mg/L.

[Example 3]

The sample of Example 3 for conductivity measurement was prepared as in Example 1 except for preparing the mixed solution by dispersing Zn polymer (organic/metallic hybrid polymer) in ethanol at the concentration of 250 mg/L.

[Example 4]

The sample of Example 4 for conductivity measurement was prepared as in Example 1 except for preparing the mixed solution by dispersing Co polymer (organic/metallic hybrid polymer) in ethanol at the concentration of 100 mg/L.

[Example 5]

The sample of Example 5 for conductivity measurement was prepared as in Example 1 except for preparing the mixed solution by dispersing Ni polymer (organic/metallic hybrid polymer) in ethanol at the concentration of 100 mg/L.

Each of samples for conductivity measurement was stored in a closed-system container (chamber) until each measurement. Similarly, each of samples was measured in the closed-system container when each measurement was performed in different conditions.

[Thickness Measurement]

Thickness of each polymer films was measured by an ellipsometer.

First, thick reference samples of each polymer film were prepared by casting at the concentration of 500 mg/L. Then, by using the reference samples, optical constants of each polymer film were determined.

Next, the thickness of each polymer film was calculated based on the obtained optical constant values by performing data fitting using the conventional oscillator model.

The thicknesses of each polymer film of Fe, Ru, Zn, Co, and Ni were: 4.5 nm; 6.8 nm; 20.0 nm; 6.4 nm; and 6.1 nm, respectively.

[Conductivity Measurement]

The conductivity of the polymer films were measured by using Solartron 1287, which was composed of a potentiostat and a frequency response analysis system (1260 frequency response analysis system).

The resistance value of the polymer film was calculated from the impedance plot (Nyquist plot) in the condition of: frequency range of 50Hz to 5MHz; and amplitude of 10mV in the alternating current bias or 1.0V in the direct current bias. Then, by using the formula shown below, the proton conductivities of the polymers were calculated by using the formula shown below.

$$\text{Proton conductivity of the polymer } (\sigma)/\text{Scm}^{-1} = (1/R) \times (1/A)$$

R=Resistance value obtained from Nyquist plot
I=Distance between electrodes
A=Cross-sectional area of the polymer membrane (calculated from the membrane thickness of the polymer)

[Conductivity of an Fe Polymer Film of Example 1]

FIGS. 4A to 4D are impedance plots (Nyquist plots) of the Fe polymer film. The plots were obtained under the condition of 95%RH. FIG. 4A is the plot in which $Z_{real} \times 10^5$ is in the range of 0 to 4. The raw data are indicated as the

solid rectangles. The fitting data are indicated as the open rectangles. Hereinafter, solid symbols indicate raw data, and open symbols indicate fitting data.

FIG. 4B is the plot in which $Z_{real} \times 10^5$ is in the range of 0 to 0.6.

FIG. 4C is the plot in which $Z_{real} \times 10^5$ is in the range of 0 to 45 when different direct current biases ranged from 0.1V to 2.0V were applied. Plots in direct current biases of 0.1V, 0.5V, 1.0V, 1.5V, and 2.0V are indicated by rectangles, circles, triangles, diamonds, and stars, respectively (hereinafter, dc biases and symbols correspond each other in the same manner).

FIG. 4D is the plot in which $Z_{real} \times 10^5$ is in the range of 0 to 1.0.

FIG. 5 is the Nyquist plot of the Fe polymer film under the condition of 58%RH and at room temperature.

[Conductivity of an Fe Polymer Film of Example 2]

FIGS. 6A to 6C are Nyquist plots of the Ru polymer film. FIG. 6A is the Nyquist plot under the condition of 95%RH. FIG. 6B is a Nyquist plot under different direct current biases. FIG. 6C is the plot in which $Z_{real} \times 10^6$ is in the range of 0 to 0.15.

[Conductivity of an Fe Polymer Film of Example 3]

FIGS. 7A to 7C are Nyquist plots of the Zn polymer film. FIG. 7A is the Nyquist plot of the Zn polymer film under the condition of 95%RH. FIG. 7B is a Nyquist plot under different direct current biases. FIG. 7C is the plot in which $Z_{real} \times 10^6$ is in the range of 0 to 0.11.

[Conductivity of an Fe Polymer Film of Example 4]

FIG. 8 is a Nyquist plot of the Co polymer film. FIG. 8 is the Nyquist plot of the Co polymer film under the condition of 95%RH.

[Conductivity of an Fe polymer film of Example 5]

FIG. 9 is a Nyquist plot of the Ni polymer film. FIG. 9 is the Nyquist plot of the Ni polymer film under the condition of 95%RH.

[I-V Characteristics Measurement]

For I-V characteristics measurement of the polymer films, Keithley 4200-SCS, which was a standard semiconductor characteristics evaluation system, was used.

Average leakage current values of the polymer films were extracted based on the obtained I-V data.

FIG. 10 is the graph showing an example of measured leaked current value.

[I-V Characteristics of an Fe Polymer Film of Example 1]

FIG. 11 is I-V characteristics of the Fe polymer film under the condition of 95%RH.

FIG. 12 is I-V characteristics of the Fe polymer film under the vacuum condition in the atmosphere (28%RH).

FIG. 13 is I-V characteristics of the Fe polymer film in the atmosphere (28%RH) after the test under the condition of 95%RH. The sweep moves from -3.0V to 3.0V first, and then moves back to -3.0V again.

FIG. 14 is I-V characteristics of the Fe polymer film in the atmosphere (28%RH) after the test under the condition of 95%RH. The sweep moves from -5.0V to 5.0V first, and then moves back to -5.0V again.

In both directions, positive current was obtained.

FIG. 15 is I-V characteristics of an Fe polymer film at sweeping rates of 1s delay (a), 5s delay (b), and 20s delay (c).

All tests were performed in the atmosphere (28%RH) after the test under the condition of 95%RH.

Current was increased in response to increase of the sweep rate.

[I-V Characteristics of a Ru Polymer Film of Example 2]

FIG. 16 is I-V characteristics of a Ru polymer film in the atmosphere (28%RH) after the test under the condition of 95%RH.

Current change was not observed.

FIGS. 17A and 17B are graphs showing I-V characteristics of a Ru polymer film. FIG. 17A indicates I-V characteristics of the Ru polymer film under the vacuum condition in the atmosphere (28%RH). The sweep direction was from -2.0V to 2.0V. FIG. 17B indicates I-V characteristics of the Ru polymer film in the condition of 95%RH.

[I-V Characteristics of a Zn Polymer Film of Example 3]

FIG. 18 indicates I-V characteristics of a Zn polymer film under the condition of 95%RH.

INDUSTRIAL APPLICABILITY

The highly proton conductive polymer film, the method of the highly proton conductive polymer film, and the humidity sensor of the present invention relate to a proton conductive film. The proton conductivity of the proton conductive membrane is $3 \times 10^{-2} Sm^{-1}$ or more, and the highly proton conductive membrane can be used under a neutral-solvent atmosphere. The highly proton conductive membrane can be utilized as a proton exchange membrane of a highly sensitive humidity sensor or a solid polymer electrolyte fuel cell. Thus, the present invention has industrial applicability in the humidity sensor industry, the fuel cell industry, or the like.

1: Humidity sensor
11: Highly proton conductive polymer film
11c: Interposing region between electrodes of the highly proton conductive polymer film
31, 32: Electrode
34: Wiring
36: Power supply
41: Substrate

**Claims**

1. A highly proton conductive polymer film made of an organic/metallic hybrid polymer film comprising: one or more metal ions selected from a group consisting of Fe ion, Co ion, Ru ion, Zn ion, and Ni ion; and bis(terpyridyl)benzene.

2. The highly proton conductive polymer film according to Claim 1, wherein the organic/metallic hybrid polymer is represented by a formula (1) below, wherein: M is one or more metal ions selected from a group consisting of Fe ion, Co ion, Ru ion, Zn ion, and Ni ion; and n is an integer of 5 or more and 1000 or less in the formula (1).

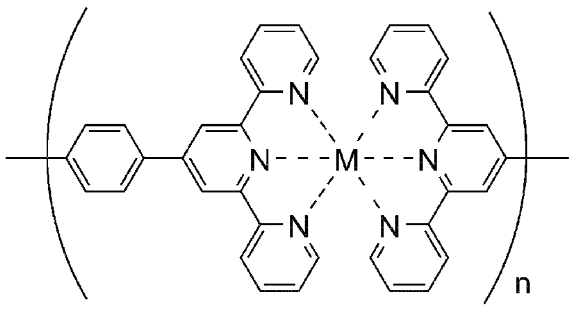

— (1)

3. A method of producing a highly proton conductive polymer film comprising the steps of:

   preparing a mixed solution by dispersing an organic/metallic hybrid polymer in a solvent at a concentration of 10 to 1000 mg/L, the organic/metallic hybrid polymer including: one or more metal ions selected from a group consisting of Fe ion, Co ion, Ru ion, Zn ion, and Ni ion; and bis(terpyridyl)benzene; and
   forming a film of the mixed solution on a substrate by a wet film-forming method selected from a casting method, a dipping method, and a spin coating method.

4. The method of producing a highly proton conductive polymer film according to Claim 3, wherein

the solvent is water, an organic solvent, or a mixture of water and an organic solvent, and
the organic solvent is one selected from a group consisting of alcohol, acetonitrile, dimethyl sulfoxide, and dimehylformamide.

**5.** A humidity sensor comprising:

a substrate;
two electrodes formed at a distance from each other on a surface of the substrate; and
a film formed on the surface so that the two electrodes are covered by the film, wherein the film is the highly proton conductive polymer film according to Claim 1 or 2.

*FIG. 1A*

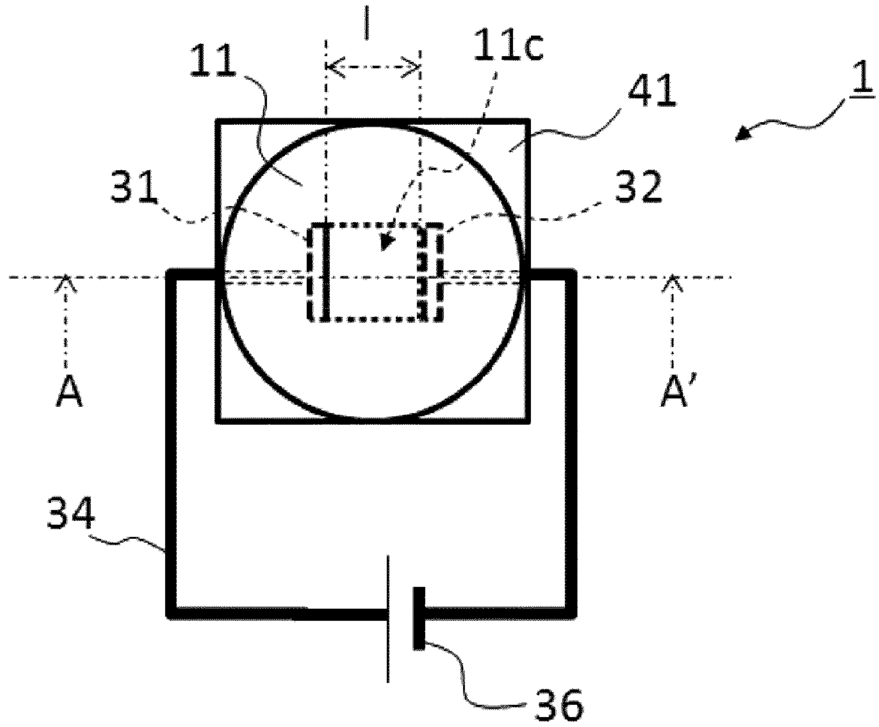


*FIG. 1B*

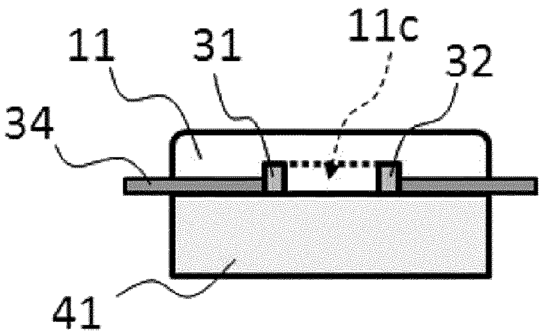

*FIG. 2*

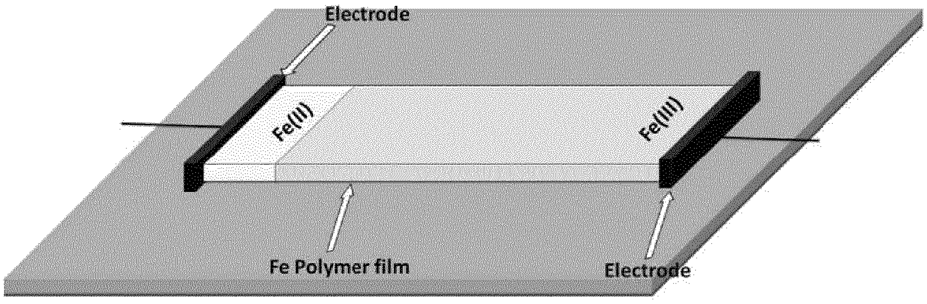
Electrode
Fe(II)
Fe(III)
Fe Polymer film
Electrode

*FIG. 3*

(a) (b)

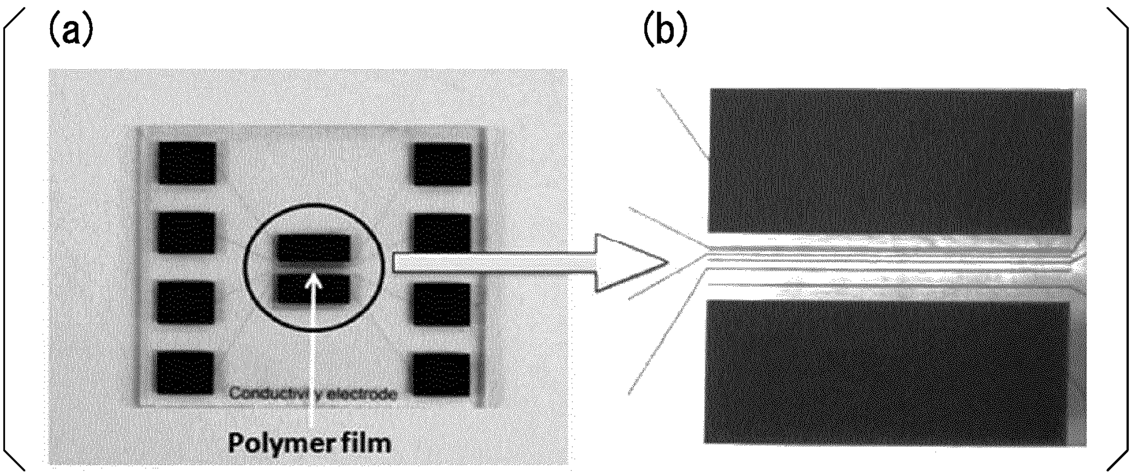
Polymer film

*FIG. 4A*

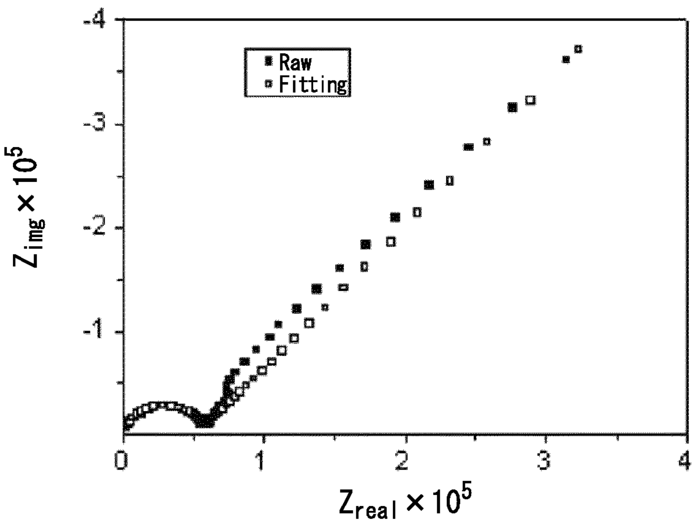


*FIG. 4B*

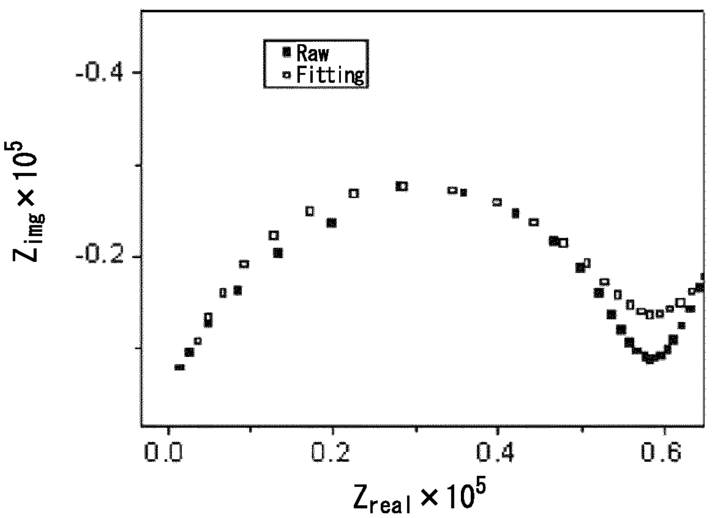


*FIG. 4C*

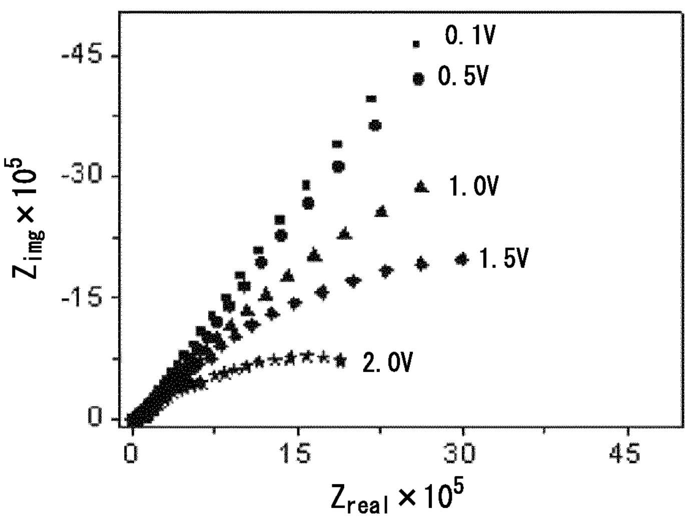

*FIG. 4D*

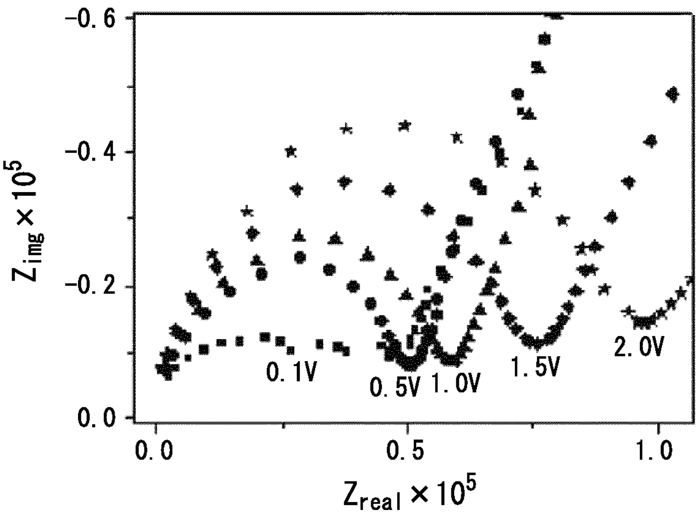
-0.6
-0.4
-0.2
0.0
$Z_{img}\times10^5$
0.0
0.5
1.0
$Z_{real}\times10^5$
0.1V
0.5V
1.0V
1.5V
2.0V

*FIG. 5*

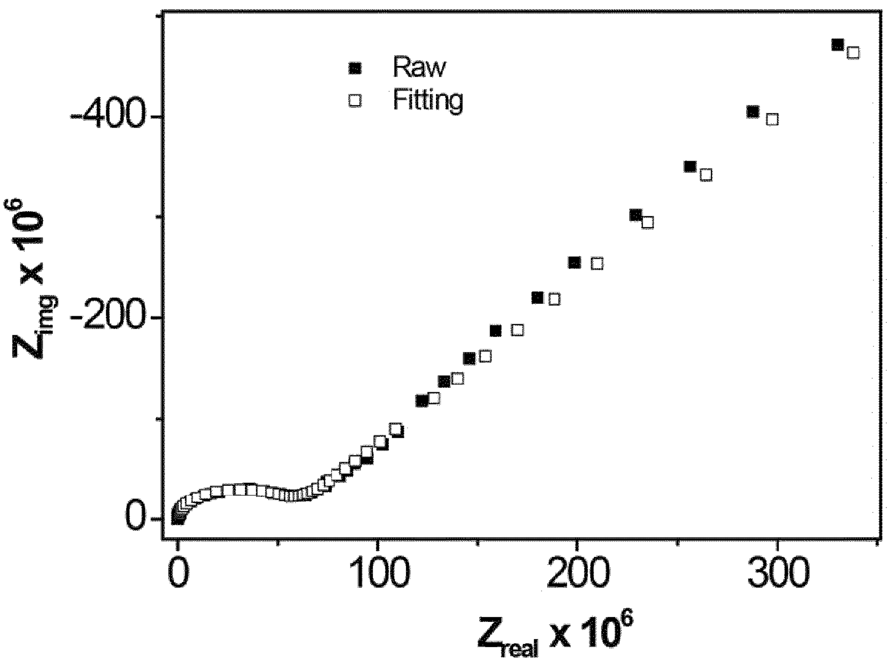
Raw
Fitting
-400
-200
0
$Z_{img}$ x $10^6$
0
100
200
300
$Z_{real}$ x $10^6$

FIG. 6A

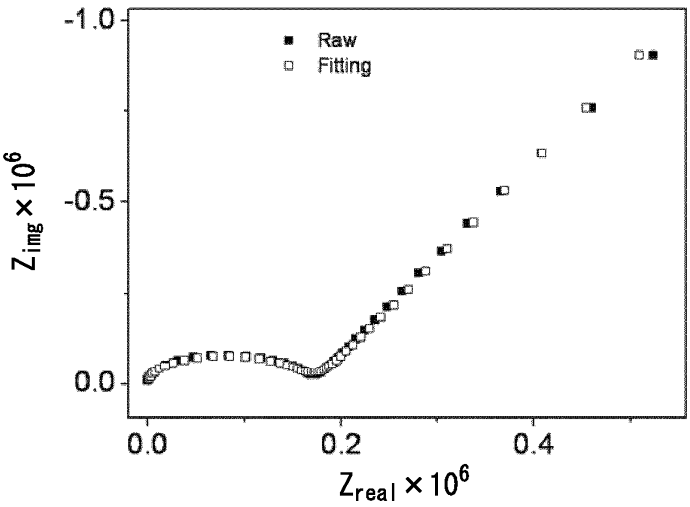


FIG. 6B

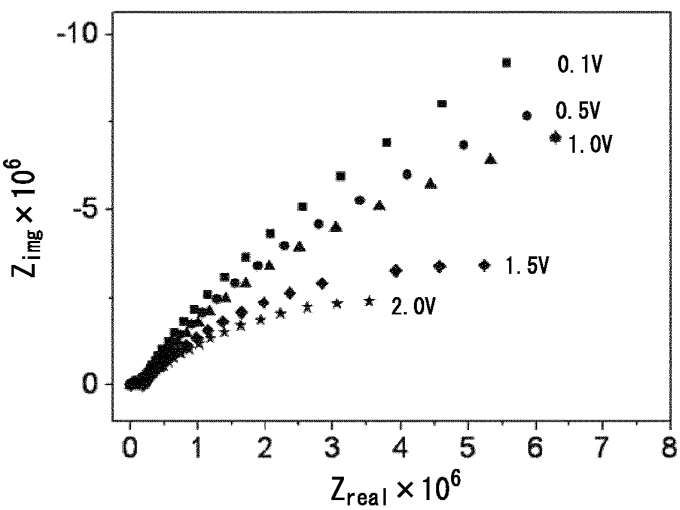


FIG. 6C

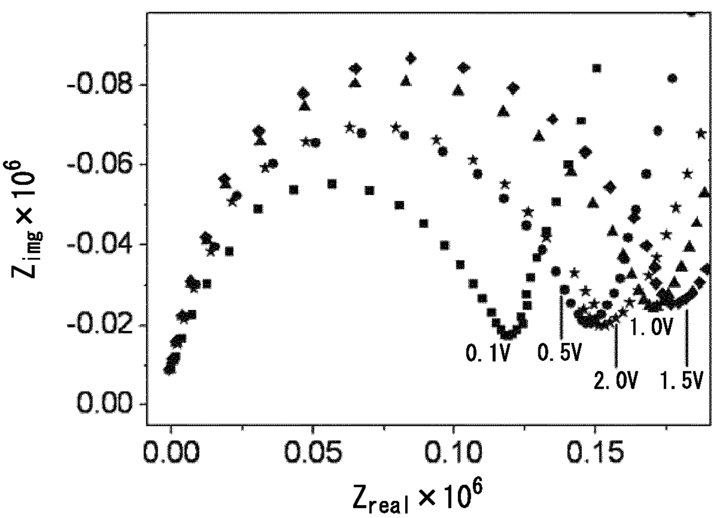

*FIG. 7A*

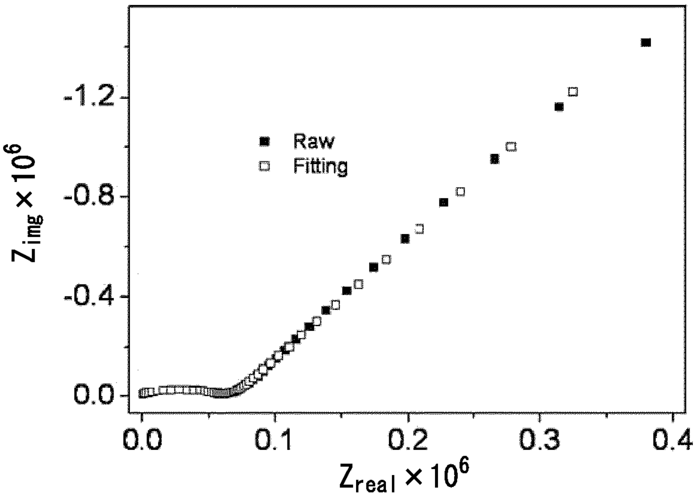


*FIG. 7B*

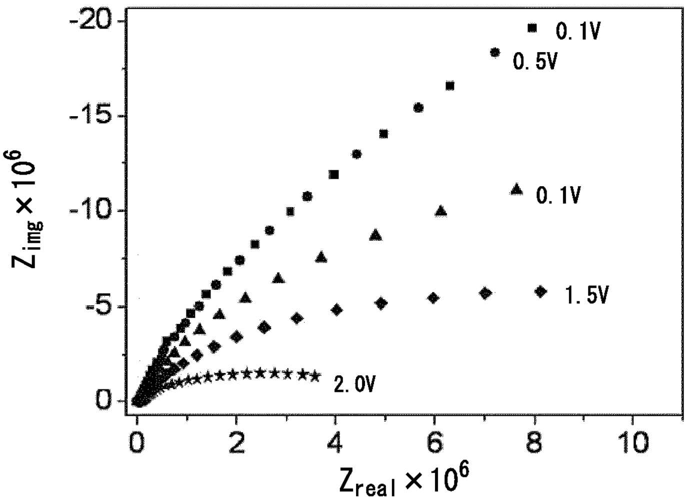


*FIG. 7C*

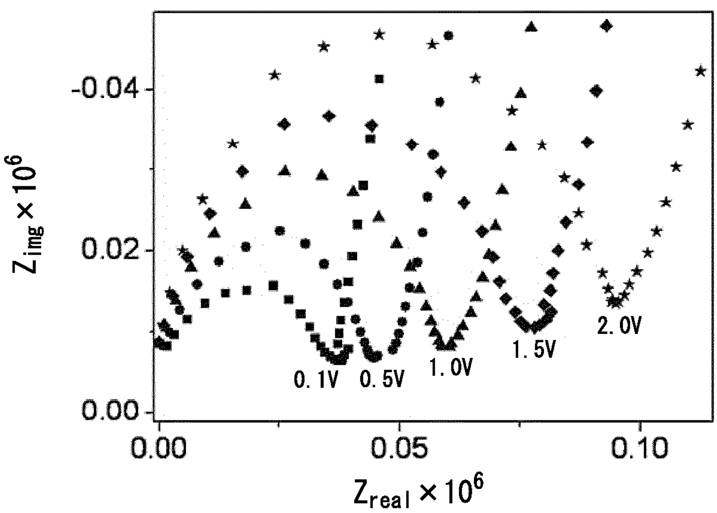

*FIG. 8*

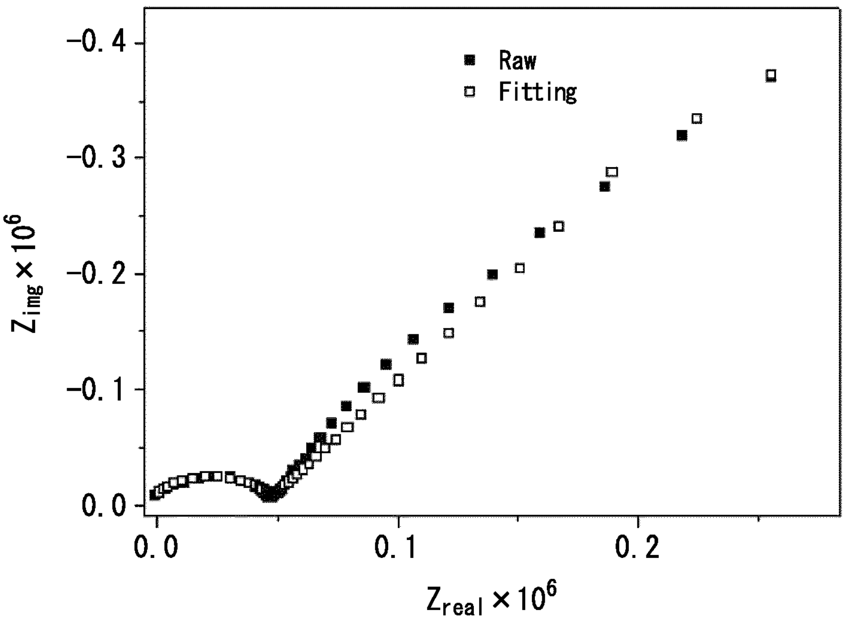

Raw
Fitting
-0.4
-0.3
-0.2
-0.1
0.0
$Z_{img} \times 10^6$
0.0
0.1
0.2
$Z_{real} \times 10^6$


*FIG. 9*

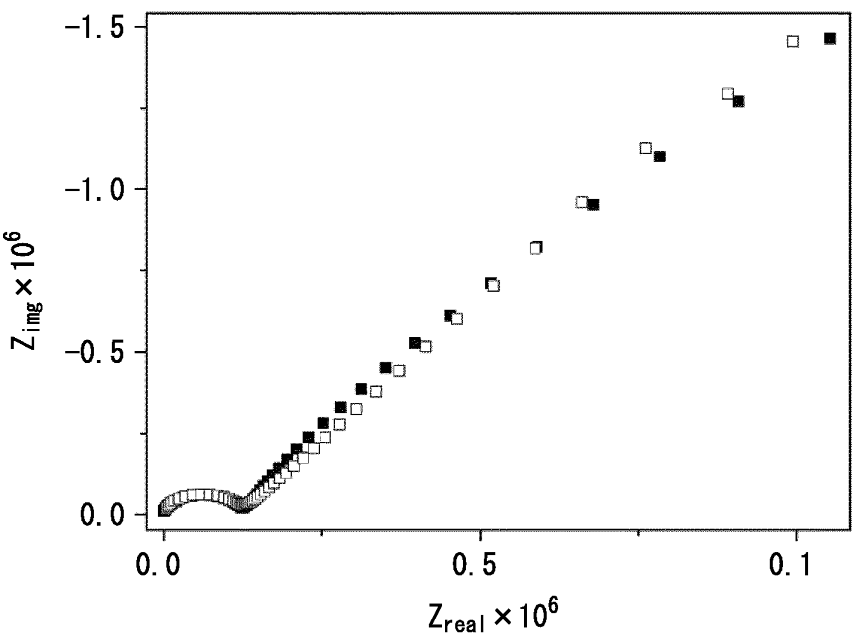

-1.5
-1.0
-0.5
0.0
$Z_{img} \times 10^6$
0.0
0.5
0.1
$Z_{real} \times 10^6$

*FIG. 10*

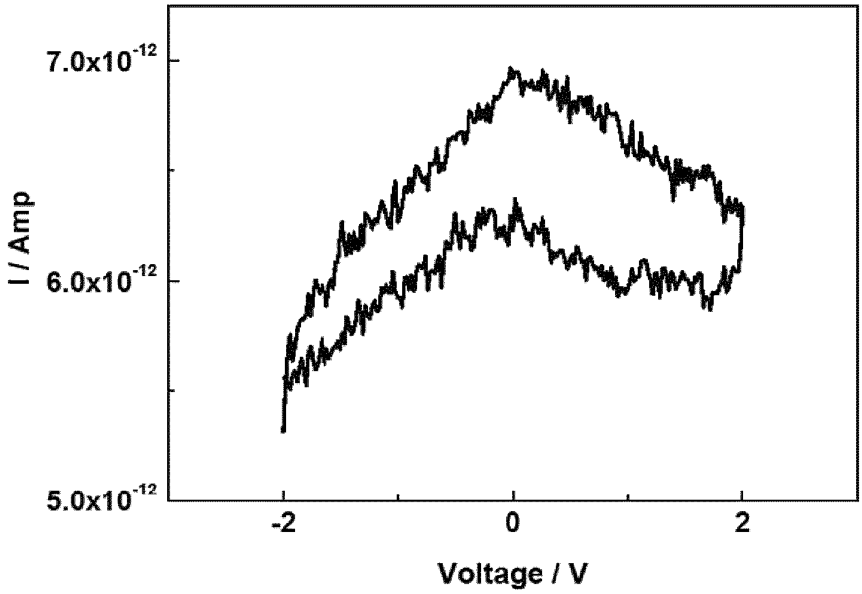
7.0x10^-12
6.0x10^-12
5.0x10^-12
I / Amp
-2
0
2
Voltage / V

*FIG. 11*

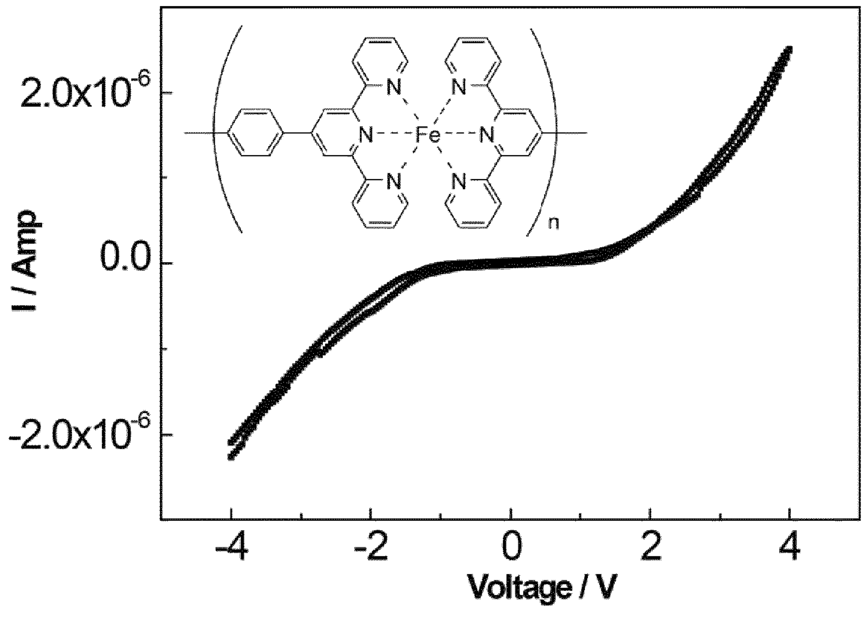
2.0x10^-6
0.0
-2.0x10^-6
I / Amp
-4
-2
0
2
4
Voltage / V

*FIG. 12*

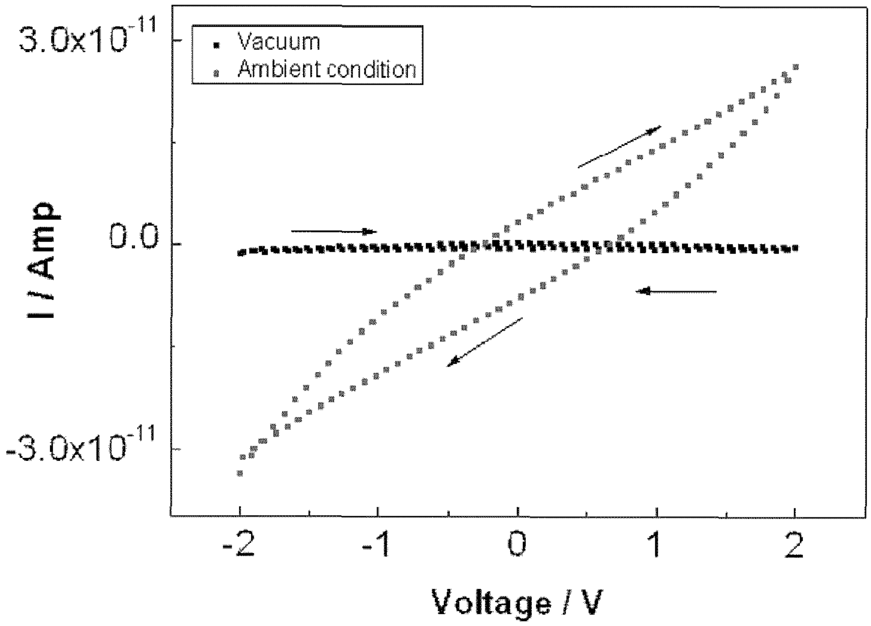
Vacuum
Ambient condition
3.0x10$^{-11}$
0.0
-3.0x10$^{-11}$
I / Amp
-2
-1
0
1
2
Voltage / V

*FIG. 13*

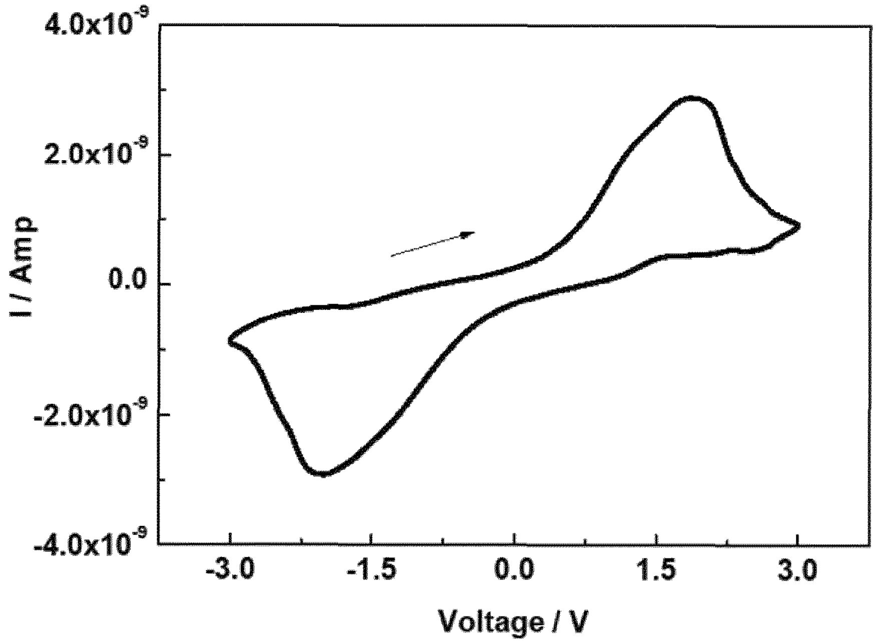
4.0x10$^{-9}$
2.0x10$^{-9}$
0.0
-2.0x10$^{-9}$
-4.0x10$^{-9}$
I / Amp
-3.0
-1.5
0.0
1.5
3.0
Voltage / V

*FIG. 14*

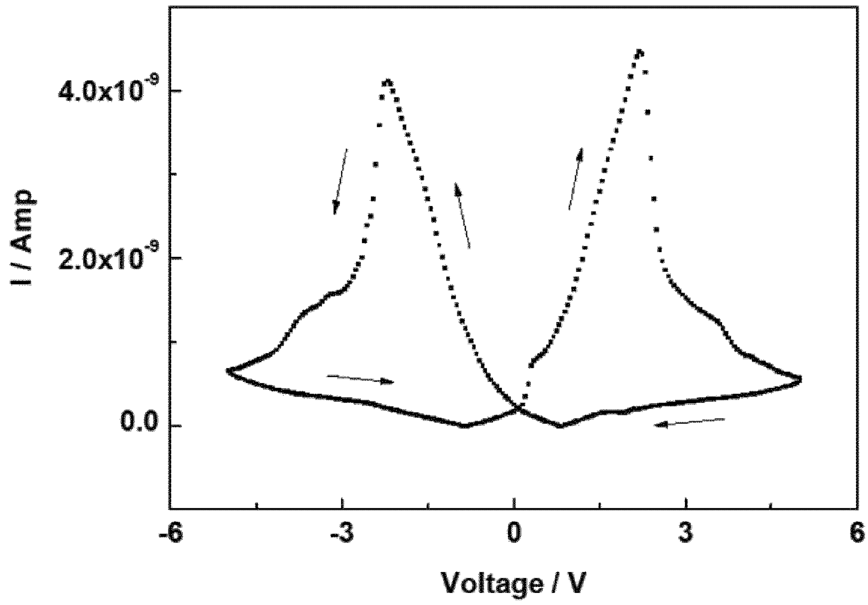
4.0x10⁻⁹
2.0x10⁻⁹
0.0
I / Amp
-6
-3
0
3
6
Voltage / V

*FIG. 15*

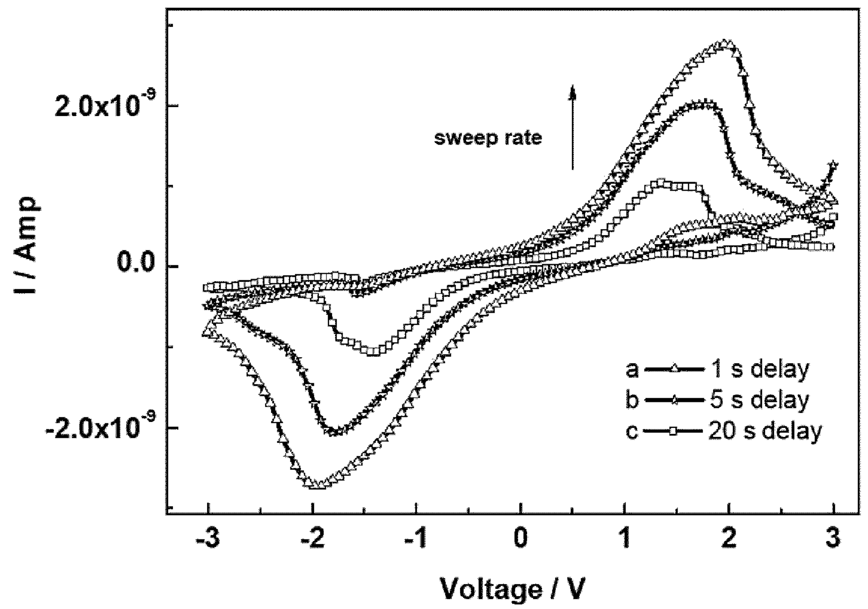
2.0x10⁻⁹
0.0
-2.0x10⁻⁹
I / Amp
sweep rate
a 1 s delay
b 5 s delay
c 20 s delay
-3
-2
-1
0
1
2
3
Voltage / V

*FIG. 16*

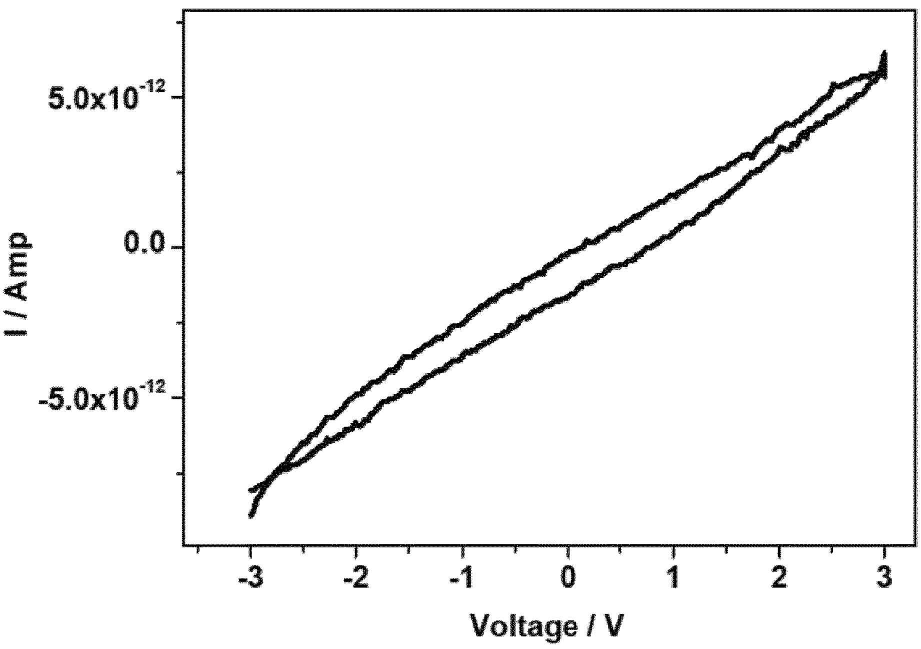

*FIG. 17A*

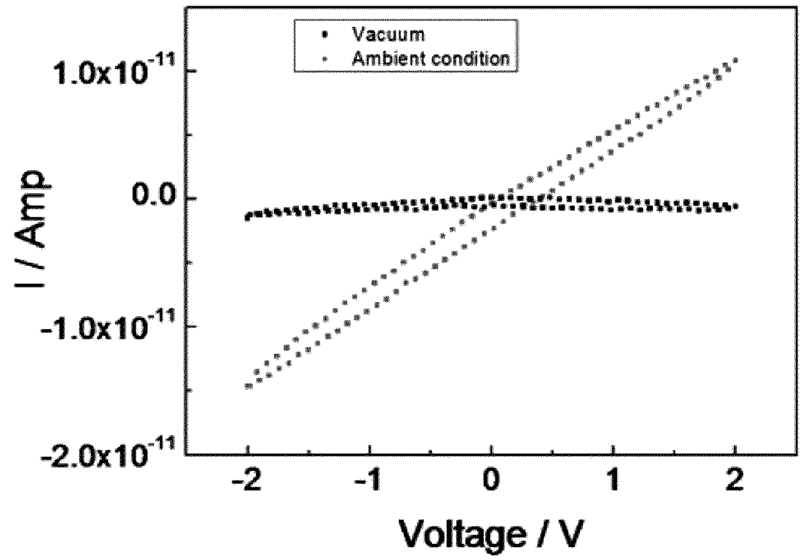


*FIG. 17B*

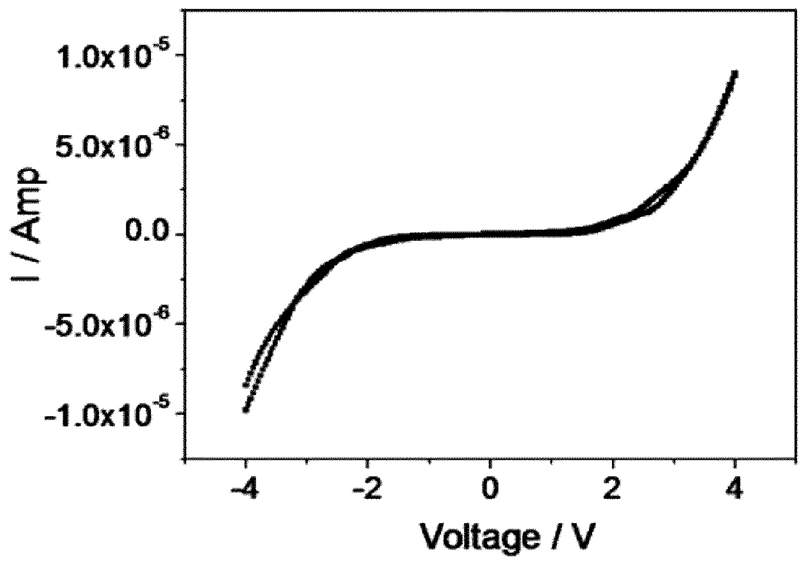

*FIG. 18*

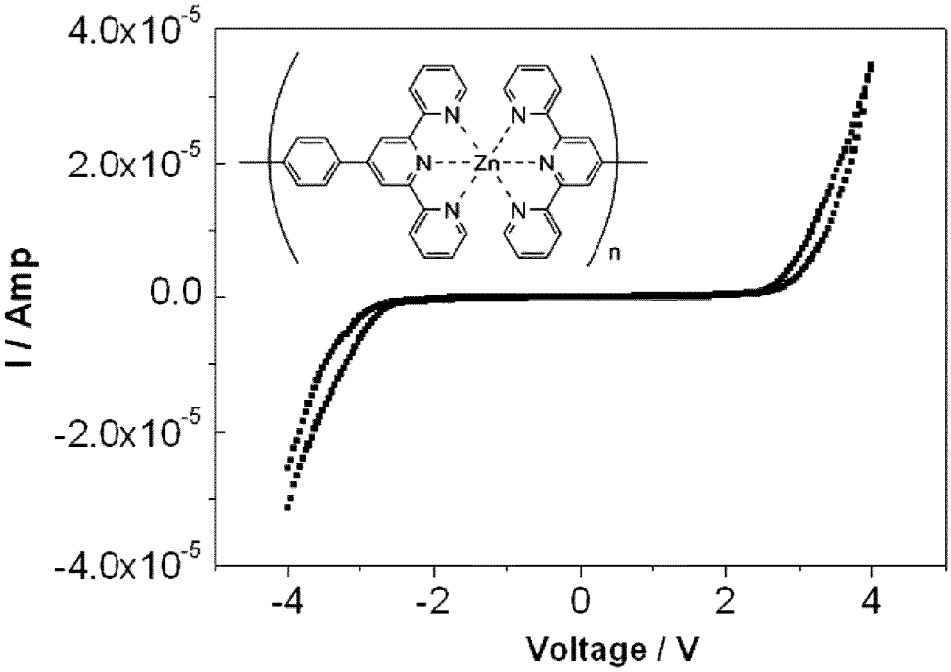

## INTERNATIONAL SEARCH REPORT

International application No.
PCT/JP2013/070299

A. CLASSIFICATION OF SUBJECT MATTER
*C08J5/22*(2006.01)i, *C08G79/00*(2006.01)i, *G01N27/04*(2006.01)i, *G01N27/12*(2006.01)i, *H01B1/06*(2006.01)i, *H01B13/00*(2006.01)i, *H01M8/02*(2006.01)i

According to International Patent Classification (IPC) or to both national classification and IPC

B. FIELDS SEARCHED

Minimum documentation searched (classification system followed by classification symbols)
C08J5/22, C08G79/00, G01N27/04, G01N27/12, H01B1/06, H01B13/00, H01M8/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | JP 2012-188519 A (Independent Administrative Institution National Institute for Materials Science), 04 October 2012 (04.10.2012), claims (Family: none) | 1-5 |
| X<br>Y | WO 2007/49371 A1 (Independent Administrative Institution National Institute for Materials Science), 03 May 2007 (03.05.2007), claims; page 26, lines 4 to 7; examples 2 to 5; page 35, lines 19 to 22 & JP 2007-112769 A & JP 2007-112957 A & US 7923530 B2 | 1,2,4<br>3,5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 August, 2013 (15.08.13) | 27 August, 2013 (27.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/070299

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2009-265437 A (Hitachi Chemical Co., Ltd., Independent Administrative Institution National Institute for Materials Science), 12 November 2009 (12.11.2009), claims; examples 1 to 2; paragraph [0046] (Family: none) | 1,2,4<br>3,5 |
| Y | WO 2008/143324 A1 (Independent Administrative Institution National Institute for Materials Science), 27 November 2008 (27.11.2008), claims; paragraphs [0059] to [0064]; fig. 1 (Family: none) | 3 |
| Y | WO 2002/62896 A1 (Kaneka Corp.), 15 August 2002 (15.08.2002), page 1, lines 8 to 11 & JP 4194843 B & US 2004/0072045 A1 & EP 1380619 A1 & CA 2437135 A | 5 |
| Y | JP 2-41337 A (Nitto Denko Corp.), 09 February 1990 (09.02.1990), page 4, lines 2 to 8 (Family: none) | 5 |
| A | WO 2008/81762 A1 (Independent Administrative Institution National Institute for Materials Science), 10 July 2008 (10.07.2008), claims (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012171062 A
- JP 2010126723 A
- JP 2010155991 A
- JP 2004031173 A


### Non-patent literature cited in the description


- **AKIHITO SHIGEMATSU et al.** Wide control of proton conductivity in porous coordination polymers. *J. Am. Chem. Soc.,* 2011, vol. 133, 2034-2036
- **MASAAKI SADAKIYO et al.** Promotion of low-humidity proton conduction by controlling hydrophilicity in layered metal-organic frameworks. *J. Am. Chem. Soc.,* 2012, vol. 134, 5472-5475
- **TEPPEI YAMADA et al.** High proton conductivity of one-dimensional ferrous oxalate dihydrate. *J. Am. Chem. Soc.,* 2009, vol. 131, 3144-3145
- **SAREEYA BUREEKAEW et al.** One-dimensional imidazole aggregate in aluminium porous coordination polymers with high proton conductivity. *nature materials,* October 2009, vol. 8, 831-836
- **MASAAKI SADAKIYO et al.** Rational designs for highly proton-conductive metal-organic frameworks. *J. Am. Chem. Soc.,* 2009, vol. 131, 9906-9907
- **HIROSHI KITAGAWA et al.** Highly proton-conductive copper coordination polymer, H2dtoaCu (H2dtoa=dithiooxamide anion). *Inorganic chemistry communications,* 2003, vol. 6, 346-348
- **Y. NAGAO et al.** Preparation and proton transport property of N,N' -diethyldithiooxamidatocopper coordination polymer. *Synthetic metals,* 2005, vol. 154, 89-92
- **CHANG HYUN LEE et al.** Importance of proton conductivity measurement in polymer electrolyte membrane for fuel cell application. *Ind. Eng. Chem. Res.,* 2005, vol. 44, 7617-7626
- **KLAUS SCHMIDT-ROHR et al.** Parallel cylindrical water nanochannels in Nafion fuel-cell membranes. *Nature Materials,* January 2008, vol. 7, 75-83
- **S. D. MIKHAILENKO et al.** Measurements of PEM conductivity by impedance spectroscopy. *Solid State Ionics,* 2008, vol. 179, 619-624
- **J. J. FONTANELLA et al.** Electrical impedance studies of acid form NAFION membranes. *Solid State Ionics,* 1993, vol. 66, 1-4
- **DANIELE PERGOLESI et al.** High proton conduction in grain-boundary-free yttrium-doped barium zirconate films grown by pulsed laser deposition. *Nature Materials,* October 2010, vol. 9, 846-852
- **REIDAR HAUGSRUD et al.** Proton conduction in rare-earth ortho-niobates and ortho-tantalates. *Nature Materials,* March 2006, vol. 5, 193-196
- **MING-ZHI YANG et al.** Fabrication and characterization of Polyaniline/PVA humidity microsensors. *Sensors,* 2011, vol. 11, 8143-8151